# EUROPÄISCHE PATENTSCHRIFT

(11) **EP 0 843 626 B1**
(45) Veröffentlichungstag und Bekanntmachung des Hinweises auf die Patenterteilung: **29.08.2001**
(21) Anmeldenummer: 97925041.2
(22) Anmeldetag: 04.06.1997
(51) Int. Cl.: B60N 2/42, B64D 25/04

(54) **FAHRZEUGSITZ MIT EINEM DÄMPFELEMENT**
VEHICLE SEAT WITH A DAMPER
SIEGE DE VEHICULE MUNI D'UN ELEMENT AMORTISSEUR

(30) Priorität: 27.06.1996 DE 19625715
(43) Veröffentlichungstag der Anmeldung: 27.05.1998
(73) Patentinhaber: Krauss-Maffei Wegmann GmbH & Co. KG, 80997 München (DE)
(72) Erfinder: BAYER, Robert, D-86316 Friedberg (DE)
(74) Vertreter: Feder, Wolf-Dietrich, Dr. Dipl.-Phys.
(86) Internationale Anmeldenummer: EP9702893
(87) Internationale Veröffentlichungsnummer: WO9800309

(56) Entgegenhaltungen:
- DE-A- 1 966 727
- DE-C- 691 100
- GB-A- 2 228 548
- US-A- 2 952 304
- US-A- 3 606 452

## Beschreibung

Die Erfindung bezieht sich auf einen Fahrzeugsitz mit einem unterhalb des Sitzes angeordneten Dämpfelement zum Absorbieren von für die Fahrzeuginsassen schädlichen Stoßbelastungen mit den Merkmalen aus dem Oberbegriff des Patentanspruchs 1.

Ein derartiger Fahrzeugsitz ist in US-A 29 52 304 beschrieben. Bei diesem bekannten Sitz, der zur Verwendung in Flugzeugen und anderen Beförderungsmitteln gedacht ist, besteht das unterhalb des Sitzes angeordnete Dämpfelement aus zwei schalenförmigen Elementen, die mit ihren Böden unter Zwischenschaltung einer Reibungsschicht aufeinandergesetzt und mittels an ihren Seitenwänden entlanggeführter elastischer Bänder bzw. eines sie einschließenden Zylinders aus elastischem Material durch die elastischen Kräfte positioniert und aufeinandergedrückt werden. Bei Stoßbelastungen, insbesondere von vorne oder von hinten, bewegen sich die schalenförmigen Elemente gegeneinander und nehmen einen Teil der Stoßenergie auf. Sich unter Stoß bleibend verformende Elemente sind bei diesem Sitz nicht vorgesehen. Auch können vertikal von unten nach oben verlaufende Stoßbelastungen nicht aufgefangen werden.

Nach der US-A 3 606 452 ist weiterhin ein Fahrzeugsitz mit einem Dämpfelement bekannt, welches zwischen dem Sitz und dem Fahrzeugboden vorgesehen ist. Aufgrund seiner stoßdämpfenden Eigenschaft bietet es dem Fahrer ballistischen Schutz vor Projektilen. Für einen Minenschutz ist ein derartiges Dämpfelement nicht geeignet, da bei den bei einer Minenexplosion auftretenden großen Verformungswegen der stoßdämpfende Unterbau des Fahrersitzes aufgrund seiner Geometrie zusammenbrechen und somit keine Stöße mehr auffangen kann.

In GB-A 2 228 548 ist eine energieabsorbierende Vorrichtung für einen Sitz eines Luftfahrzeugs mit den Merkmalen aus dem Oberbegriff des Patentanspruchs 1 beschrieben. Bei dieser bekannten Vorrichtung ist das Dämpfüngselement als schmaler Zylinder ausgebildet, der schräg aufwärts gerichtet in die vordere Stütze des Sitzgestells integriert ist. Der beulfähige Zylinder besitzt einen Blechmantel und ist zwischen zwei biegesteifen Platten befestigt, wobei an der Innenseite der oberen Platte eine Kolbenstange angeordnet ist, an deren Ende ein im Zylinder gleitender Kolben sitzt. Der Zylinder kann daher nur auf die Länge von Kolbenstange plus Kolben zusammengedrückt werden. Durch seine Anordnung ist er dafür gedacht, in erster Linie schräg von vorn kommende Stoßbelastungen, wie sie in erster Linie bei einem Luftfahrzeug auftreten können, aufzunehmen.

In DE-A 1 966 727 ist ein Fahrzeugsitzgestell beschrieben, das insbesondere für Flugzeuge gedacht ist und einen hinteren Querholm besitzt sowie einen vorderen Querholm, von dem aus sich eine vordere Stütze zur Vorderkante der Sitzschale erstreckt, die als unter Energieaufnahme deformierbare Stützwand ausgebildet ist. Auch diese Einrichtung ist in erster Linie zur Aufnahme von schräg von vorne nach oben verlaufenden Stoßbelastungen gedacht und bei einer solchen Stoßbelastung kippt der vordere Teil der Sitzschale nach unten. Zur Aufnahme von vertikal nach oben gerichteten Stoßbelastungen ist diese Vorrichtung wenig geeignet.

Demgegenüber liegt der Erfindung die Aufgabe zugrunde, an einem Fahrzeugsitz extreme Stoßbelastungen mit im wesentlichen vertikaler Komponente zu absorbieren, wie sie insbesondere beim Überfahren einer Mine und dadurch ausgelöster Explosion derselben entstehen, und zwar mittels eines in der Herstellung und Anordnung möglichst einfachen Dämpfelements, das große Verformungswege zuläßt.

Diese Aufgabe wird gemäß den Merkmalen des Patentanspruchs 1 gelöst.

Die Dämpfung der bei einer Minenexplosion auftretenden hohen Beschleunigungen wird durch die energieverzehrende Struktur des Beulelements erzielt, dessen Funktion auf dem Prinzip des Blechbeulens beruht. Dadurch wird ein hoher Ansprechwert gewährleistet, was einen sicheren, normalen Fahrbetrieb ermöglicht. Durch die erfindungsgemäße Anwendung der Beulstruktur ist sichergestellt, daß kein harter Aufschlag stattfindet, wenn der Verformungsweg aufgebraucht ist, sondern ein weicher, überproportional zunehmender Anstieg der Beschleunigung erfolgt.

Ein besonders einfacher kostengünstiger Aufbau des Dämpfelements wird mittels eines Blechzylinders erreicht, der zwischen beiden Platten durch Punktschweißung befestigt ist. Die Ansprechkraft des Dämpfelements kann dabei mittels einer Reihe von Bohrungen auf der mittleren Höhe der Zylindermantelfläche auf einen günstigen Wert eingestellt werden. Die Höhe des Zylinders kann dabei dem zur Verfügung stehenden Bauraum angepaßt werden.

Die optimale Schutzfunktion des Fahrzeugsitzes für den Fahrer wird durch einen stabilen Gesamtaufbau in Form einer harten Sitzschale, wie z.B. bei einem GFK-Schalensitz ohne oder nur mit geringer Polsterung, sichergestellt, da im Falle einer Minenexplosion nur im Bereich der Beulstruktur eine Verformung stattfindet. Der Sitz wird vorteilhaft in Verbindung mit einem VierPunkt-Gurt benutzt, dessen Schultergurte nicht an der Sitzlehne sondern am Fahrzeuggehäuse befestigt werden. Aufgrund dieses Gurtsystems und der extrem kurzzeitigen Stoßbelastung bei einer Minenexplosion, deren Hauptkomponente nach oben gerichtet ist, kann auf eine vertikale Führung verzichtet werden.

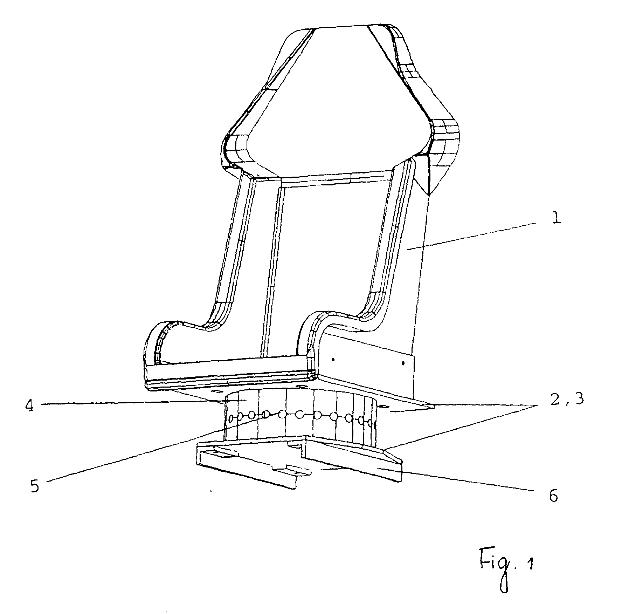

In der Zeichnung ist ein Ausführungsbeispiel der Erfindung dargestellt.

An der Unterseite der Sitzschale des Fahrzeugsitzes 1 ist eine sich über die Breite und Tiefe der Sitzschale und parallel zu ihr erstreckende obere biegesteife Platte 2 angeordnet. Der lediglich aus einem Blechmantel bestehende Zylinder 4 ist symmetrisch zur vertikalen Mittelachse der oberen Platte 2 stehend zwischen der oberen und einer unteren biegesteifen Platte 3 angeordnet. Er erstreckt sich jeweils bis unmittelbar vor die Randbereiche der Platten 2 und 3 und ist an beiden Platten mittels Punktschweißung befestigt. Der Zylinder 4 ist auf der mittleren Höhe seiner Mantelfläche mit einer Reihe von Bohrungen 5 versehen.

Die untere Platte 3 ist mit einem Träger 6 fest verbunden, der zur Befestigung des Fahrzeugsitzes 1 an einem nicht dargestellten Fahrzeug dient und gegebenenfalls mit einem ebenfalls nicht dargestellten Verstellmechanismus versehen ist.

## Patentansprüche

1. Fahrzeugsitz mit einem unterhalb des Sitzes angeordneten Dämpfelement zum Absorbieren von für die Fahrzeuginsassen schädlichen Stoßbelastungen, bei dem die Sitzschale des Fahrzeugsitzes (1) nur von dem Dämpfelement alleine getragen wird, wobei das Dämpfelement zwischen einer an der Unterseite der Sitzschale des Fahrzeugsitzes befindlichen, oberen biegesteifen Platte (2) und einer unteren biegesteifen Platte (3) befestigt ist, **dadurch gekennzeichnet,** daß das Dämpfelement aus einem stehenden, lediglich aus einem Blechmantel bestehenden, beulfähigen Zylinder (4) besteht und daß der Zylinder (4) mit Bohrungen (5) versehen ist.

2. Fahrzeugsitz nach Anspruch 1, **dadurch gekennzeichnet**, daß der Zylinder auf der mittleren Höhe seiner Mantelfläche mit einer Reihe von Bohrungen (5) versehen ist.

3. Fahrzeugsitz nach Anspruch 1 oder 2, **dadurch gekennzeichnet**, daß der Zylinder (4) mittels Schweißpunkten an den beiden Platten (2, 3) befestigt ist.

## Claims

1. A vehicle seat with a damping element arranged beneath the seat for absorbing shock loads harmful to the vehicle occupants, in which the seat shell of the vehicle seat (1) is supported solely by the damping element, the damping element being secured between an upper, rigid plate (2) disposed on the underside of the seat shell of the vehicle seat and a lower rigid plate (3), **characterised in that** the damping element is formed by an upright, collapsible cylinder (4) merely comprising a sheet metal cylindrical surface, and the cylinder (4) is provided with bores (5).

2. A vehicle seat according to claim 1, **characterised in that** the cylinder is provided at the mid vertical point of its cylindrical surface with a row of bores (5).

3. A vehicle seat according to claim 1 or 2, **characterised in that** the cylinder (4) is secured to the two plates (2, 3) by welding points.

## Revendications

1. Siège de véhicule comprenant un élément amortisseur agencé au-dessous du siège pour absorber les sollicitations par à-coups nuisibles pour les occupants du véhicule, dans lequel la coque du siège (1) est portée uniquement par l'élément amortisseur seul, ledit élément amortisseur étant fixé entre une plaque supérieure (2) rigide vis-à-vis de la flexion et située au niveau de la face inférieure de la coque du siège de véhicule, et une plaque inférieure (3) rigide vis-à-vis de la flexion, **caractérisé en ce que** l'élément amortisseur est composé d'un cylindre déformable par flambage (4) vertical simplement composé d'une enveloppe en tôle, et en ce que le cylindre (4) est pourvu de perçages (5).

2. Siège de véhicule selon la revendication 1, **caractérisé en ce que** le cylindre est pourvu d'une rangée de perçages (5) vers la moitié de la hauteur de sa surface enveloppe.

3. Siège de véhicule selon l'une ou l'autre des revendications 1 et 2, **caractérisé en ce que** le cylindre (4) est fixé sur les deux plaques (2, 3) au moyen de points de soudure.
